# EUROPEAN PATENT APPLICATION

(11) **EP 1 150 408 A1**
(43) Date of publication of application: **31.10.2001**
(21) Application number: 01201530.1
(22) Date of filing: 26.04.2001
(51) Int. Cl.: H02G 3/08

(54) **Connection box**

(30) Priority: 26.04.2000 NL 1015023
(71) Applicant: Faget Electrische Meetinstrumenten- en Apparatenfabriek Faber & Getreuer B.V., 8331 LH Steenwijk (NL)
(72) Inventor: Snellink, Sander, 8031 LA Zwolle (NL)
(74) Representative: Ferguson, Alexander

(57) **Abstract**

Connecting box having connecting elements for electrically connecting electric feeder leads and electrically conducting supply elements for the supply of current to light-emitting elements. Such light-emitting elements particularly are lamp poles such as lamp posts. The connecting box comprises an elongated bottom made of electrically insulating material. A hood made of electrically insulating material that can be attached to the bottom in a detachable manner for forming a space between bottom and hood. The space has a first and a second end. The connecting elements are placed in the space. A first cover plate closes off the first end and is provided with a number of circular passages for electric feeder leads. A second cover plate closes off the second end. Attachment means are present for attaching the first cover plate to the bottom in a detachable manner. The first cover plate is built up from several cover plate members. The cover plate members can be fittingly placed against each other in pairs. One of the cover plate members is provided with a semicircular opening and another cover plate member, which can be placed fittingly against said one cover plate member, is also provided with a semicircular opening. When placing the one cover plate member against the other, the circular passages in question for the electric feeder leads are formed. One of the cover plate members can be placed on the bottom.

## Description

The present invention relates to a connecting box having connecting elements for electrically connecting electric feeder leads and electrically conducting supply elements for the supply of current to elements using current, for instance light-emitting elements, in particular lamp poles such as lamp posts, which connecting box is provided with an elongated bottom made of electrically insulating material, a hood made of electrically insulating material that can be attached to the bottom in a detachable manner for forming a space between bottom and hood, which space has a first and a second end, in which the connecting elements are placed in the space, a first cover plate for closing off the first end and provided with a number of circular passages for electric feeder leads, a second cover plate for closing off the second end, and attachment means for attaching the first cover plate to the bottom in a detachable manner.

Such a connecting box has been used in practice for some years now. The first cover plate is slid onto a cable housing feeder leads coming out of the ground. After that the feeder leads are stripped and attached to the connecting elements in question. The electrically conducting supply elements, comprising fitting leads, that supply current to the fitting in question of the light pole can also be connected to such connecting elements. The further feeder leads for other light poles can also be connected to such connecting elements. Said further feeder leads can leave the connecting box via the first cover plate. Such connecting boxes are for instance mounted in lamp posts. Although such a known connecting box functions as it should, there is a need amongst others for a more simple mounting of the several electrically conducting elements, the need for a watertight connecting box so that the connecting box can be used safely outdoors, the need for a pull relief for electric wires and the need for a connecting box that is suitable for the entrance and exit of 1, 2, 3 or 4 feeder or fitting cables, respectively.

It is an object of the present invention to provide a connecting box that fulfils at least one of the above needs.

To that end a connecting box of the above-mentioned type according to the invention is characterized in that the first cover plate is built up from several cover plate members, in which the cover plate members can be fittingly placed against each other in pairs, in which one of the cover plate members is provided with a semicircular opening and another cover plate member, which can be placed fittingly against said one cover plate member, is also provided with a semicircular opening, so that when placing the one cover plate member against the other the circular passages in question for the electric feeder leads are formed, and in that one of the cover plate members can be placed on the bottom. By using several cover plate members that can be placed against each other, the feeder leads can first be attached to the connecting elements, and after that the cover plate can be placed around the feeder cables. This simplifies the mounting considerably.

An embodiment of a connecting box according to the invention is characterized in that the connecting box is watertight. The connecting box according to the invention can be made watertight in a simple manner. For instance sealing rings or sealing tape can be placed between the feeder cables and the first cover plate in a simple manner, which, with the known connecting boxes, would be very laborious and inadequate.

In the connecting box according to the invention the cover plate members preferably are made of elastic material. As a result of the right proportions of the dimensions of the feeder cables and the circular openings, a watertight clamping can be realised when mounting in between them. Preferably the elastic material is a rubber, which is an extremely suitable material.

In order to realise a positioning or connection, respectively, for the cover plate on the bottom in a correct and simple manner, the connecting box according to an embodiment of the invention is characterized in that the bottom is provided with retaining means for retaining the one cover plate member that can be placed on the bottom. Preferably the retaining means are raised edges.

A further simplified mounting is possible when the cover plates can be placed against each other and on the bottom, respectively, in one way only. This may for instance be realised by making the cover plate members asymmetrical.

Although the attachment means may for instance be screws, it is preferred because of accelerated and accurate connection that the attachment means are a quick-connection. A quick-connection formed by protruding cams formed on the outer surface of the bottom, by a U-shaped tension bracket, in which near the free ends of the tension bracket openings cooperating with the cams are provided, and a tensioning element for detachably clamping the cover plate members in a tensioning manner against the bottom and against each other, while supporting against the tension bracket, has appeared to be particularly suitable. Of course the cams may alternatively be provided on the tension bracket and the openings may be provided on the bottom.

Preferably the tensioning element is a rotatable element provided with wedge-shaped cams, in which the tensioning element can preferably be rotated about a centre line perpendicular to the bottom.

A correct position of the U-shaped tension bracket and a simplified mounting can be achieved when a U-shaped holder is provided for the cover plate members other than the cover plate that can be placed on the bottom. Preferably the holder is provided with a protruding shaft, and the rotatable element is provided with an opening for accommodating the shaft.

An accurate positioning of the tension bracket is obtained when the outer wall of the holder is provided with a retaining groove for retaining the tension bracket.

In some cases the feeder cables coming out of the ground are enveloped by metal pipes that are provided with screw thread for attachment with corresponding screw thread on the connecting box. Such a screw connection takes up time and is not completely watertight. In a preferred embodiment of a connecting box according to the invention a third cover plate is provided situated near the first cover plate so that the first cover plate is placed between the second and third cover plate, and the bottom and the holder are provided with an extra retaining groove for retaining the third cover plate. Said cover plate may be provided with openings for receiving the metal pipes, in which the metal pipes may be provided with flanges that engage behind the third cover plate. Said third cover plate can be attached to the connecting box in the same manner as the first cover plate, because of which the watertightness is also improved.

In view of protection from theft or the prevention of vandalism, it is preferred that the hood completely covers the attachment means. This also improves the watertightness.

The crossing of the wires, which often is awkward and time-consuming, during mounting, is prevented in an embodiment of a connecting box according to the invention because the connecting elements contain a number of sleeve clamps placed in a row in the longitudinal direction of the bottom, each sleeve clamp being arranged on the bottom, in which the feeder leads in question can be clamped by the sleeve clamps in question, which sleeve clamps are electrically connected to the electrically conducting supply elements. Not only can the crossing of wires be prevented in this way, but moreover a connection between wires is realised that is almost free of a transfer resistance.

Although the pull reliefs that are known per se can be provided, it is advantageous when the sleeve clamps are arranged such that the feeder leads can be placed in the sleeve clamps via a squared bend. Because of said squared bend such a rigidity is introduced that no separate pull relief is needed with a sufficiently stiff wire.

Although the first cover plate can be provided with passage openings, it is preferred that the first cover plate is provided with circular weakenings. Said circular weakenings can easily be removed on the spot by the mechanic, depending on the number of openings wanted. When removed, such weakenings may also be used for ventilation or, in unwanted case that dampness does indeed arise in the connecting box, for instance as a result of condensation, for moisture discharge.

When the fitting leads do not leave the connecting box via one or more of the openings in the first cover plate, they may for instance leave the connecting box via the second cover plate, which to that end is provided with circular openings, for instance for attaching swivels. Pipes for watertight protection of the swivels and the connecting box may be placed over said swivels.

Although known per se, a connecting box according to the present invention has an additional advantage when it is provided with an automatic earthing.

Preferably the electrically conducting supply elements are provided with one or several fuses, for protecting the element using current, for instance the light source against excessive currents.

Some embodiments of the connecting box according to the invention are described below by way of example on the basis of the drawing, in which:
Figure 1 shows a schematic cut-away view of a connecting box according to the invention,
Figure 2 shows a schematic cut-away view of a detail of the connecting box shown in figure 1,
Figure 3 is a view comparable to the one of figure 2 from another view point, and
Figure 4 shows a schematic cut-away view of an alternative embodiment of a connecting box according to the present invention.

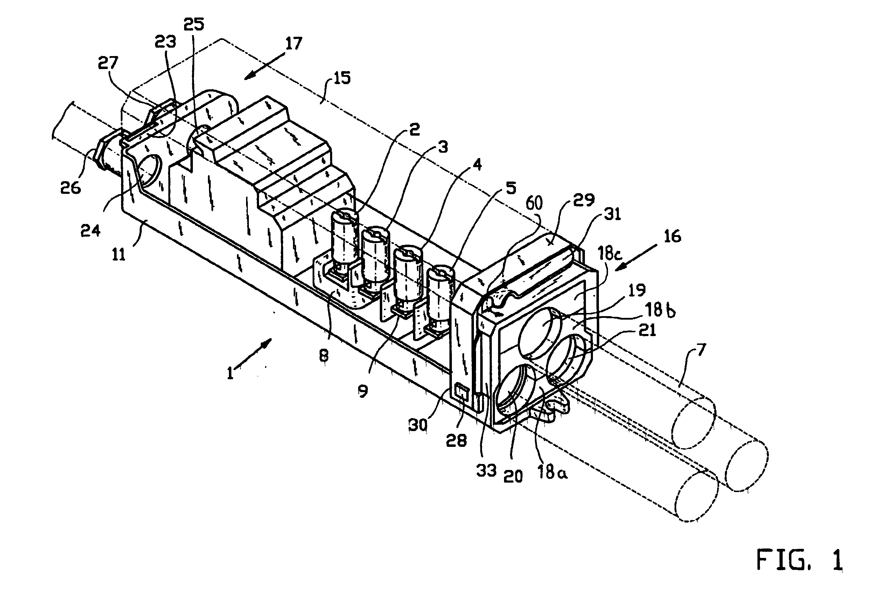

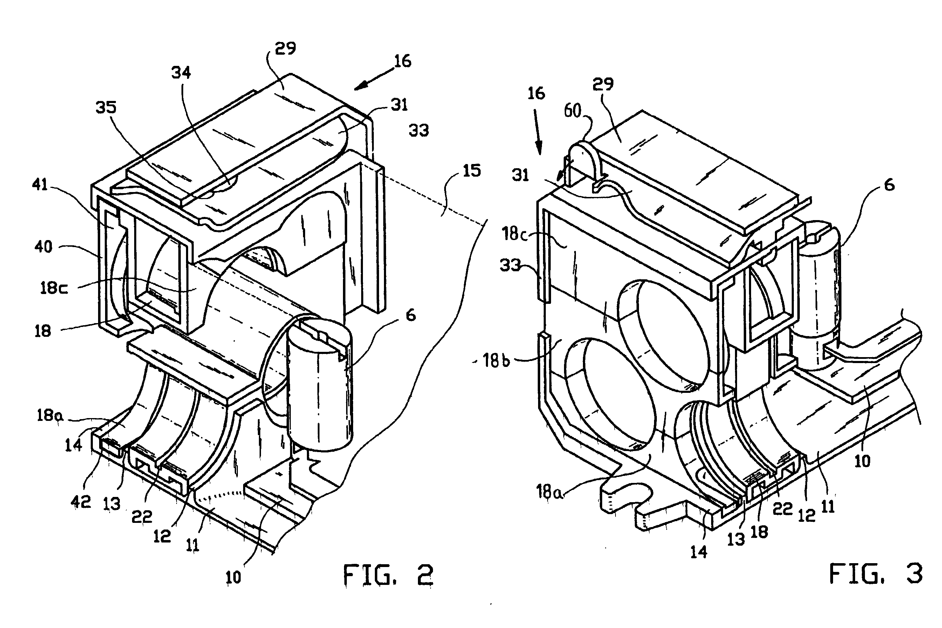

Figure 1 shows a schematic cut-away view of a connecting box 1 according to the invention. The connecting box 1 contains connecting elements 2, 3, 4, 5, 6 (see figure 2). The number of connecting elements is five in the example shown, but depending on the need may be another number.

A cable 7 coming out of the ground houses feeder leads (not shown for the sake of clarity). The connecting elements 2-6 are meant for electrically connecting the electric feeder leads and the electrically conducting supply elements 8, 9, 10 (see figure 2). Said supply elements 8, 9, 10 supply current to elements using current, for instance light-emitting elements, particularly lamp poles such as lamp posts. To that end the supply elements can be connected to fitting leads (not shown) in a known manner.

In this exemplary embodiment, the connecting elements 2-6 contain a number of sleeve clamps that have been placed in a row in the longitudinal direction of a bottom 11. Each sleeve clamp 2-6 is mounted on the bottom 11. The use of sleeve clamps is advantageous over other connecting elements because of the very low transfer resistance between the wires/elements to be connected. Moreover the electric connection of the sleeve clamps to the electrically conducting supply elements 8, 9, 10 can take place very accurately and in an electrically efficient way. Moreover because of the positioning in line of the sleeve clamps it can be prevented that the wires to be connected to the sleeve clamps cross each other, which considerably improves and simplifies the orderliness and the mounting.

This structure also offers the possibility to realise a pull relief in a simple way, particularly by arranging the sleeve clamps such that the feeder leads can be placed in the sleeve clamps via a squared bend.

The elongated bottom 11 of the connecting box is made of electrically insulating material. The bottom 11 is provided with raised edges 12, 13, 14 forming retaining means, as will be described later on. The retaining means may alternatively be formed by protruding cams or the like.

A hood 15 of electrically insulating material can be attached on the bottom 11 of the connecting box in a detachable manner, for forming a space between bottom 11 and the hood 15, in which space the connecting elements have been placed. The space has a first 16 and a second 17 end.

A first cover plate 18 (figures 2 and 3) closes off the first end 16. The first cover plate 18 is provided with a number of circular passages 19, 20, 21 for electric feeder leads.

According to the invention the first cover plate 18 is built up from several cover plate members 18a, 18b, 18c. The cover plate members 18a, 18b, 18c can be fittingly placed against each other in pairs.

One of the cover plate members is provided with a semicircular opening and another cover plate member, which can be placed fittingly against said one cover plate member, is also provided with a semicircular opening. As a result when placing the one cover plate member against the other, the circular passages in question for the feeder leads are formed.

One 18a (figure 2) of the cover plate members can be placed on the bottom 11, between the raised edges 12, 13 that retain said cover plate member 18a. As a result a correct positioning of the cover plate 18 on the bottom can be achieved in a simple manner.

The cover plate members 18a, 18b, 18c are made of an elastic material, as a result of which through selecting the right proportions of the dimensions of the feeder cables and the circular openings a watertight clamping can be realised when mounting in between them. Preferably the elastic material is a rubber, which is an extremely suitable material. A watertight connection can also be made by inserting sealing tape or the like. A pre-positioning groove 22 may be provided for accommodating a plastic sealing cap.

Simplification of mounting is realised when the cover plates can be placed against each other and on the bottom, respectively, in one way only, for instance because the cover plate members are designed asymmetrically.

Such a cover plate 18 can be attached on the feeder cables 7, after the feeder leads have been attached to the sleeve clamps.

In order to allow the mechanic on the spot to make the connecting box suitable for a number of cables present, the first cover plate, in an alternative embodiment or additionally, may be provided with circular weakenings, that can easily be removed by the expert, for instance with a knife.

Furthermore the connecting box 1 according to the invention is provided with a second cover plate 23 for closing off the second end 17. Said second cover plate 23 may be provided with openings 24, 25 and swivels 26, 27 for leading through the fitting leads. Alternatively the second cover plate 23 may be closed, and the fitting leads can exit the connecting box 1 via one of the passages in the first cover plate 18. It is noted here that the passages in the first cover plate 18 can also be used for leading through cables to an adjacent lamp post, preferably provided with a similar connecting box.

For a mechanically correct attachment of the first cover plate 18 on the bottom 11 of the connecting box 1, in which also the feeder cables are clamped in the first cover plate 18 in a watertight manner, attachment means are provided for attaching the first cover plate 18 on the bottom 11 in a detachable manner. Such attachment means may for instance be screws. According to the invention it is preferred however that the attachment means form a quick-connection.

An inventive quick-connection is formed by two protruding cams (of which one 28 can be seen in figure 1) formed on the outer surface of the bottom 11. Near its free ends, a U-shaped tension bracket 29 has openings 30 cooperating with the cams 28. A tensioning element 31 clamps the tension bracket 29 on the bottom 11, after having been brought in the operative position.

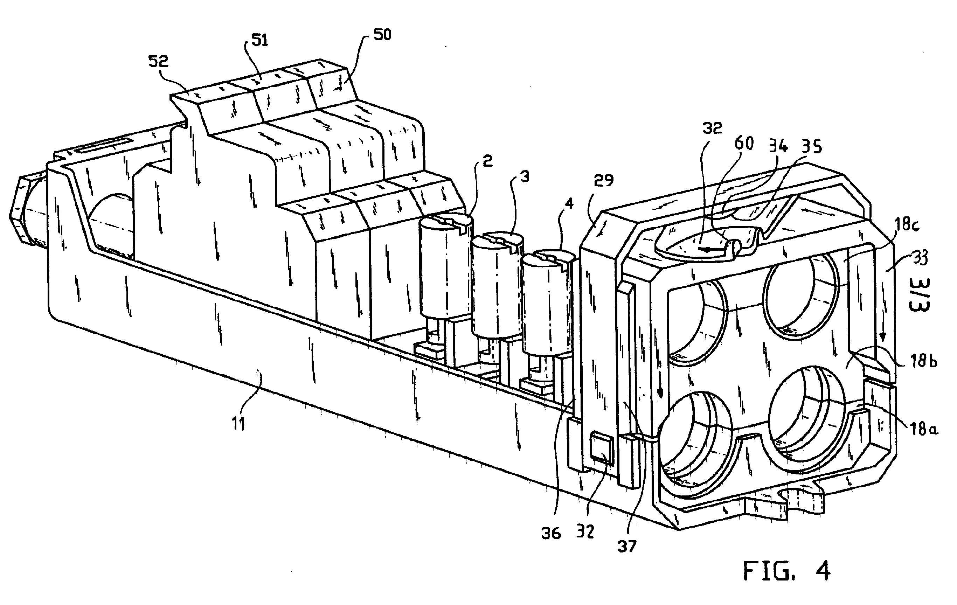

In the embodiment shown, the tensioning element 31 is a rotatable element provided with wedge-shaped cams (32 see figure 4). In order to facilitate the mounting and attachment, a U-shaped holder 33 is provided. The holder 33 envelops the cover plate members 18b, 18c. For facilitating rotation of the tensioning element 31 and its position fixation, the holder 33 is provided with a protruding shaft 34 (figure 2), and the rotatable element 31 is provided with an opening 35 for accommodating the shaft 34.

The outer wall of the holder 33 is provided with a retaining groove formed by two raised edges 36, 37 (figure 4) for retaining the tension bracket 29, so that its correct positioning can be realised.

Realising the quick-connection is effected as follows: in the un-tensioned situation of the holder 33 (see for instance figure 4) the lip 60 is for instance manually taken and turned in the direction of the arrow as a result of which the tensioning element 31 is rotated with the long side of the tensioning element 31 transverse to the long side of the connecting box 1. The inclined wedge-shaped cams 32 are clamped here like a wedge between the U-shaped tension bracket 29 and the holder 33. The tension bracket 29 however is fixated, because it is attached to bottom 11 as a result of which the holder 33 presses the cover plate members 8a, 8b, 8c against each other. Loosening the quick-connection takes place by turning the lip 60 from the tensioned position of the tension bracket 33, into the opposite direction as described above, for instance in the direction of the arrow as shown in figure 3 or figure 1.

In order to prevent unwanted access to the connection box 1, the hood 15 covers the attachment means completely.

In some cases the feeder cables coming out of the ground are enveloped by metal pipes. Usually said pipes are provided with screw thread for attachment to corresponding screw thread on the connecting box. Such a screw connection however, takes up time and is not completely watertight. In a preferred embodiment of a connecting box according to the invention a third cover plate 40 (figure 2) is provided, which is situated near the first cover plate 18. The placement is such that the first cover plate 18 is placed between the second 23 and the third cover plate 40. Preferably the bottom 11 and the holder 33 are provided with an extra retaining groove 41 and 42, respectively, for retaining the third cover plate 40. Said third cover plate 40 is provided with openings for receiving the metal pipes.

The metal pipes may be provided with flanges that engage behind the third cover plate 40. Said third cover plate 40 is attached to the connecting box in the same manner as the first cover plate 18, also improving the watertightness.

In figure 4 an alternative embodiment of a connecting box according to the invention is shown, in which the first cover plate has four passages. This embodiment shows the fuses 50, 51, 52, which may also be present in the previous embodiment. The connecting elements can be enveloped by a protection that can be attached to the bottom in a detachable manner.

## Claims

1. Connecting box having connecting elements for electrically connecting electric feeder leads and electrically conducting supply elements for the supply of current to elements using current, for instance light-emitting elements, in particular lamp poles such as lamp posts, which connecting box is provided with:
- an elongated bottom made of electrically insulating material,
- a hood made of electrically insulating material that can be attached to the bottom in a detachable manner for forming a space between bottom and hood, which space has a first and a second end,
- in which the connecting elements are placed in the space,
- a first cover plate for closing off the first end and provided with a number of circular passages for electric feeder leads,
- a second cover plate for closing off the second end, and
- attachment means for attaching the first cover plate to the bottom in a detachable manner,
**characterized in that** the first cover plate is built up from several cover plate members, in which the cover plate members can be fittingly placed against each other in pairs, in which one of the cover plate members is provided with a semicircular opening and another cover plate member, which can be placed fittingly against said one cover plate member, is also provided with a semicircular opening, so that when placing the one cover plate member against the other the circular passages in question for the electric feeder leads are formed, and **in that** one of the cover plate members can be placed on the bottom.

2. Connecting box according to claim 1, **characterized in that** the connecting box is watertight.

3. Connecting box according to claim 1 or 2, **characterized in that** the cover plate members are made of elastic material.

4. Connecting box according to claim 3, **characterized in that** the elastic material is a rubber.

5. Connecting box according to any one of the preceding claims, **characterized in that** the bottom is provided with retaining means for retaining the one cover plate member that can be placed on the bottom.

6. Connecting box according to claim 5, **characterized in that** the retaining means are raised edges.

7. Connecting box according to any one of the preceding claims, **characterized in that** the cover plates can be placed in one way only against each other and on the bottom, respectively.

8. Connecting box according to claim 1, **characterized in that** the attachment means are a quick-connection.

9. Connecting box according to claim 8, **characterized in that** the quick-connection is formed by protruding cams formed on the outer surface of the bottom, by a U-shaped tension bracket, in which near the free ends of the tension bracket openings cooperating with the cams are provided, and a tensioning element for detachably clamping the cover plate members in a tensioning manner against the bottom and against each other, while supporting against the tension bracket.

10. Connecting box according to claim 9, **characterized in that** the tensioning element is a rotatable element provided with wedge-shaped cams, in which the tensioning element preferably can be rotated about a centre line perpendicular to the bottom.

11. Connecting box according to claim 3, **characterized in that** a U-shaped holder is provided for the cover plate members other than the cover plate that can be placed on the bottom.

12. Connecting box according to claim 10 and 11, **characterized in that** the holder is provided with a protruding shaft, and the rotatable element is provided with an opening for accommodating the shaft.

13. Connecting box according to claim 9 and 11, or 12, **characterized in that** the outer wall of the holder is provided with a retaining groove for retaining the tension bracket.

14. Connecting box according to claim 11, **characterized in that** a third cover plate is provided situated near the first cover plate so that the first cover plate is placed between the second and third cover plate, and the bottom and the holder are provided with an extra retaining groove for retaining the third cover plate.

15. Connecting box according to any one of the preceding claims 7-13, **characterized in that** the hood completely covers the attachment means.

16. Connecting box according to any one of the preceding claims, **characterized in that** the connecting elements contain a number of sleeve clamps placed in a row in the longitudinal direction of the bottom, each arranged on the bottom, in which the feeder leads in question can be clamped by the sleeve clamps in question, which sleeve clamps are electrically connected to the electrically conducting supply elements.

17. Connecting box according to any one of the preceding claims in particular claim 16, **characterized in that** the connecting elements are provided with a pull relief, preferably that the sleeve clamps are arranged such that the feeder leads can be placed in the sleeve clamps via a squared bend.

18. Connecting box according to any one of the preceding claims, **characterized in that** the first cover plate is provided with circular weakenings.

19. Connecting box according to any one of the preceding claims, **characterized in that** the second cover plate is provided with circular openings for attaching swivels.

20. Connecting box according to any one of the preceding claims, **characterized in that** the connecting box is provided with an automatic earthing.

21. Connecting box according to any one of the preceding claims, **characterized in that** the electrically conducting supply elements are provided with one or several fuses.

22. Connecting box according to any one of the preceding claims, **characterized in that** the connecting elements are enveloped by a protection that can be attached to the bottom in a detachable manner.
